# EUROPEAN PATENT SPECIFICATION

(11) **EP 2 260 717 B1**
(45) Date of publication and mention of the grant of the patent: **27.07.2016**
(21) Application number: 10005895.7
(22) Date of filing: 08.06.2010
(51) Int. Cl.: A23G 3/20, A21C 9/04, A21C 15/00, A23G 3/00, A23P 20/12, A23P 20/18

(54) **Coating delivery method and apparatus**
Verfahren und Vorrichtung zur Beschichtungsbereitstellung
Procédé et appareil de fourniture de revêtement

(30) Priority: 08.06.2009 GB 0909704
(43) Date of publication of application: 15.12.2010
(73) Proprietor: Spice Application Systems Ltd., Oxford, Oxfordshire OX4 4GH (GB)
(72) Inventor: King, Peter, Oxford, Oxfordshire OX4 4YQ/GB (GB)
(74) Representative: Humphrey-Evans, Edward John

(56) References cited:
- EP-A1- 1 514 483
- GB-A- 2 286 515
- GB-A- 2 385 810
- US-A- 3 860 105
- US-A- 5 238 493
- US-B1- 6 588 363

## Description

### Field of the Invention

The present invention relates to an improved apparatus and method for delivering a coating substance using gas assistance and more particularly, though not necessarily, to an improved apparatus for delivering a powder, liquid, or suspension coating using gas assistance.

### Background

There exists a wide variety of products that require to be coated with a substance (e.g. powder, liquid, suspension, etc) during their preparation. For example, snack foods such as potato crisps and corn chips are usually coated with flavouring. It is generally desirable to be able to achieve a uniform and controllable coating over the entire surface of a product. US6588363 (Burke) teaches of a two gravity feed devices which drop seasoning on two platforms conveyor platforms separated by an inverter.

A traditional method used for coating snack foods involves the use of a rotating drum, having a 2 - 3m length and a diameter of 0.5 - 1.5m, which has its axis generally aligned with the horizontal, but with a slight tilt. Products introduced into one end of the drum tend to travel to the other end as the drum rotates. Flavouring in the form of a powder is delivered via an inclined chute to a location within the drum so that the flavouring is sprinkled onto the products to be coated. This technique tends to result in a non-uniform coating of products, with flavour concentration varying between product pieces and across the surfaces of individual pieces.

It has been recognised that coating uniformity may be improved by placing a charge on the powder, using for example a needle electrode located in the transit path of the product. If the product delivery mechanism, e.g. a rotating drum, is grounded, the products to be coated will also tend to be grounded as they pass under the powder delivery mechanism. The charged powder will be attracted to the products in a generally uniform manner, in turn resulting in a generally uniform coating.

An alternative electrostatic coating apparatus comprises a venturi tube through which the coating substance is forced by a pressurised gas. Upon emerging from an exit nozzle, the substance passes a charging electrode.

Figure 1 illustrates an apparatus for coating a product as described in GB 2,385,810. The apparatus comprises an inclined chute 1 for conveying a coating substance 2, with an exit end 3 and an entry end 4. A gas jet nozzle 5 and a needle electrode 6 are located beneath the exit end 3 of the chute 1. The pressurised gas stream becomes charged as it passes through the electric field created by the charged needle electrode. The charged gas then impacts on the falling coating, dispersing it and imparting a charge to it, and will be attracted to the product in contact with the grounded drum surface, being at ground potential.

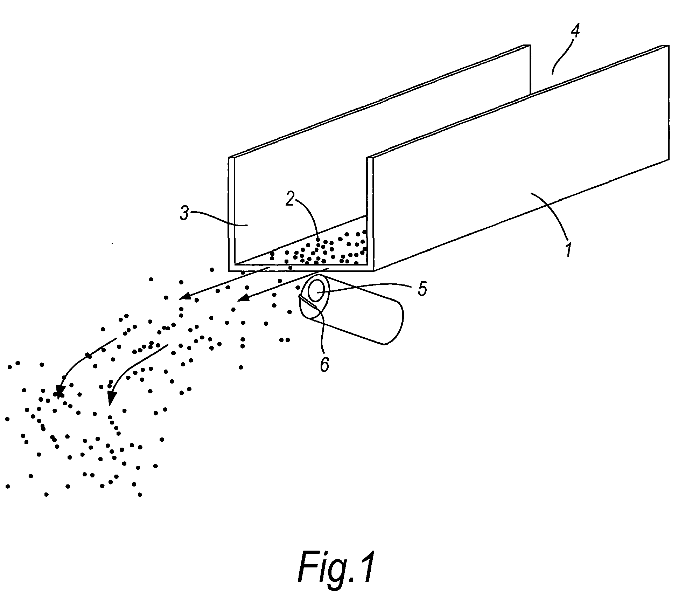

As described in GB 2,385,810, the chute 1 used to convey the coating substance is narrow, with a width of 75mm or less, and the coating tends to continue moving in the (longitudinal) direction of the chute (as shown by the arrows in Figure 1) after exiting from the chute, such that the coating is only applied within a narrow region beneath it.

Notwithstanding the above, the percentage of snack foods that are produced without full double-sided coating is high, with a significant number of typical snack foods being coated on only one side, being of the order of 93%. The drum is of a conductive material and is at ground potential relative to the spray discharge electrode, whereby the charged flavouring particles are attracted to the food product, in contact with drum. Vanes are employed on the inside surface of the drum whereby to cause them to turn, whilst not guaranteeing the product to be exposed on both sides to the falling flavouring, are liable to damage product; large products such as crisps are easily damaged; this can damage the reputation of a brand. GB2286515 (Jainia) provides a similar system.

A further alternative coating apparatus comprises the use of a pressurized gas and a product delivery system such as a vibratory chute with an outlet; the gas acts as a dispersant (gas knife) below the outlet whereby to agitate the product and enable the powder to be dispersed prior to settling under gravity onto product upon a conveyor such as a vibratory conveyor or a belt conveyor. This type of system creates a cloud of coating powder which can leave a considerable amount of overspray upon neighbouring machinery; product may easily clump together. Once product has been placed in a bag for sale, then this powder can easily fall off. Double sided coating can be performed by a variety of means.

Another problem that arises with prior art systems is that, through the use of a rotating drum system or other conveyor systems is that there can be tremendous wastage of coating material, the rotating drum is open at both ends and the coating material will tend to form an aerosol powder which can permeate the whole atmosphere of a manufacturing facility; this can also result in a contamination of coating materials, for example, flavours between manufacturing lines. Indeed, any gas introduced to assist in dispersion of the coating material will encourage such permeation into the atmosphere about the machinery. This requires flavouring machinery to be placed several metres away from each other if different flavourings are to be applied by adjacent machinery. This can also have an effect on the proximity of packaging systems; packages may not be effectively sealed due to contaminants, if packaging systems are placed too close to drum coating systems.

A still further problem associated with the rotating drum system is that, in the event of a change in the application of a flavour to a snack, then there is a considerable downtime taken to clean the apparatus; the system operable to flavour the snacks can take 30 minute - 60 minutes to clean; the drums of 1m or more in diameter, having a length of 2 - 4 m need to be carefully cleaned; the flavour of products must be uniform or otherwise a snack brand will lose customer loyalty. In terms of an industrial process, this corresponds to a loss of 1/48th - 1/24th manufacturing time in a 24/7 manufacturing facility which is additionally due to cleaning. This can be significant. In short this leads to manufacturing facilities working at less than full efficiency; which means idle machinery for at least part of the time and a reduced return on investment.

A further aspect to consider is that of flavouring product being wasted to the atmosphere; not only to be considered in terms of the financial loss directly due to loss of product, but also the loss arising from the extra cleaning necessary, not only of the manufacturing machinery adjacent the flavouring application machine, but also of the office machinery, telephones and the like; the vapour particles of flavouring will settle anywhere and everywhere. Indeed, personnel do not appreciate wearing masks to avoid inhalation of unwanted powders and aerosols. Further, such personnel do not appreciate the requirement for cleaning areas adjacent a coating machine.

As will be appreciated, many systems have been developed over the years whereby to enable the coating of flavourings. Despite advances in coating systems, the percentage of snack food products that are not coated uniformly or only on one side remains high, with a significant number of everyday snack-foods being coated on one side being of the order of 7% or more. US6588363 (Burke et al) teaches of a seasoning system and method and teaches of a high flow capacity system where "seasoning is reliably dispersed without the need for continually adjusting the system, for cleaning clogged tube holes, or for cleaning the seasoning build up on a vibratory conveyor system". GB2286515 (Electrostatic Flavouring System Food Machinery International Ltd.) - teaches of a method and apparatus for flavouring a food product. To reduce escape of "clouds of seasoning", an electric charge is applied.

### Object to the invention

The present invention seeks to overcome or ameliorate at least some of the disadvantages described above: the present invention seeks to provide a system that can enable flavouring to be applied in a more uniform fashion than has heretofore been possible. The present invention seeks to provide a system for applying flavouring to snack foods and the like reliably and evenly across the entire surfaces of the snack or at least on two sides of a snack.

### Summary

The present invention is applicable in particular to the coating of snack food products with a dry, powdered flavouring. The invention may also be used to coat products with substances other than dry powdered substances including, for example, liquids and suspensions.

According to a first aspect of the present invention there is provided an apparatus for delivering a coating substance towards a product to be coated, the apparatus comprising a first coating station including a pressurised gas supply, an inverting station, a second coating station including a pressurised gas supply and conveyor to convey product through said apparatus: Wherein said conveyor is operable to convey product upon a surface thereof to said first coating station to enable coating using gas assistance upon an exposed surface of said product toward the inverting station; Wherein the inverting station is operable to invert product such that, prior to product being transported by the conveyor to said second station where product is arranged such that an uncoated surface thereof is exposed; Wherein said conveyor is operable to convey product upon a surface thereof through and out of said second coating station to enable coating using gas assistance upon a second exposed surface of said product as it passes therethrough; each said coating station comprising an enclosure, each said enclosure being placed in close proximity to the conveyor, whereby application of the coating substance is contained within a confined volume above the conveyor of each respective coating station, whereby coating product pollution with regard to the atmosphere is substantially absent.

In the event that electrostatic coating methods are employed, it is advantageous that the conveyor supporting product is grounded. In such circumstances, the conveyor is conveniently a vibratory conveyor made of a conductive material, although conductive belt conveyors can also be employed. By the use of an electrostatic means to apply a coating to a product, the charged powder is attracted to ground potential which assists in maintenance of an effectively clear atmosphere outside of the enclosure, since coating material that does not reach product can be collected by removing from components at ground potential.

The coating apparatus can comprise one or more of a powder feed, a slurry feed, a liquid feed, a vibratory feed and an electrostatic feed.

The inverter apparatus can comprise one of adjacent, stepped conveyor belts, a cascade inverter system, or a curvilinear plate system.

The enclosures are arranged whereby to cover the first and second coating stations, the enclosures defining an internal space above each coating device, for example an electrostatic device, spray device or otherwise to enable each coating device to operate whereby a coating via spraying, the generation of an electrostatic vapour, mist, or cloud can be performed and a coating such as a food flavouring can be deposited upon product passing through the enclosure, whilst being transported upon a conveyor. Each enclosure has sides that depend below an operational height of the conveyor and are spaced a minimum distance laterally therefrom. Further, each enclosure has a front and rear edge portion which extend transversely above the conveyor, having depending edges which lie sufficiently adjacent above the conveyor to enable passage of product being transported upon the conveyor - so that passage of product upon a conveyor transporting product from an entrance part to an exit part of the enclosure can be enabled. These first and second edges are conveniently adjustable relative to a conveyor surface whereby to allow passage of different types of product thereunder. Accordingly, the enclosure minimises the possibility of coating product passing from the enclosure other than as a coating upon product, especially reducing aerosol and airborne coating materials.

An internal gutter may be provided to prevent any accumulated coating, which may nonetheless adhere to an inside of the enclosure, from dropping in a clump-like fashion upon product to be coated. In the event that the coating system is an electrostatic system, it is preferable that the enclosure is at the same potential as the charged coating whereby charged coating is encouraged to pass to oppositely charged product.

The conveyor may comprise a single unit, but depending upon the type of inverter employed, may comprise three separate units, for passing through the first coating unit; for inverting the product; and for passing through the second coating unit. Where electrostatics are not employed, rubber or other non-conductive materials can be used for the conveyor.

The present invention thus provides a system of positively coating products such as snack food products and the like in a three stage process, whereby a minimal loss of coating product is encountered and coating of both sides of double-sided snacks is 99% or more effective, which is a significant improvement over known processes. In a first stage of the process, a first side of a product is coated; the product is then inverted and then a second surface of the product is coated.

A significant advantage to the present invention is the lack of waste product in unison with a substantially uniformity on coverage of both sides of a two-sided snack product. As will be appreciated, the present invention is applicable to non-planar snack and non-snack products, although one limitation to the shape of product is provided by the inverting device. As is known, there are a number of inverting apparatus, some of which are not too dissimilar to mouldboard ploughs; other systems rely upon a fall from one conveyor to another to cause inversion.

Conveniently, a packing station is provided adjacent an output from the second coating station. This can reduce the chances of contamination from any airborne contaminants.

According to a second aspect of the present invention there is provided a method of delivering a coating substance towards a product to be coated in a coating procedure operating on two distinct phases, whereby in conjunction with the application of an effective flipping unit can effectively coat at least two sides of a product.

Specifically, in accordance with a further aspect of the invention, there is provided a method for coating a product with a coating substance employing an apparatus comprising a first coating station including a pressurised gas supply, an inverting station, a second coating station including a pressurised gas supply, and conveyor to convey product through said apparatus, each coating station having a coating area enshrouded with an enclosure: the method comprising the steps of conveying a product upon a conveyor through a first coating station, the enclosure being placed in close proximity to the conveyor, and using gas assistance, coating the coating substance on a first exposed surface of said product as it passes through the first coating station toward the inverting station; conveying the product to an inverting station; inverting product by means of the inverting station whereby to expose a second surface of the product; conveying the product to a second coating station; the enclosure being placed in close proximity to the conveyor, and coating the coating substance on a second exposed surface of said product as it passes through the second coating station; whereby, upon exit from the second coating station the product is coated on two faces and coating product pollution with regard to the atmosphere is substantially absent.

### Brief Description of the Drawings

Reference shall now be made to the figures as shown in the accompanying drawing sheets, wherein:
Figure 1 illustrates a known coating delivery apparatus;
Figure 2 is a simple perspective view of a coating delivery apparatus according to an embodiment of the present invention;
Figure 3 is a side view of a coating delivery apparatus according to an embodiment of the present invention;
Figure 3a shows a first inverting apparatus;
Figure 3b shows a second inverting apparatus being a plan view of the chute of the coating delivery apparatus of Figure 2; and
Figure 4a and 4b show side and plan views of a spray enclosure.

### Detailed Description of the Preferred Embodiments

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

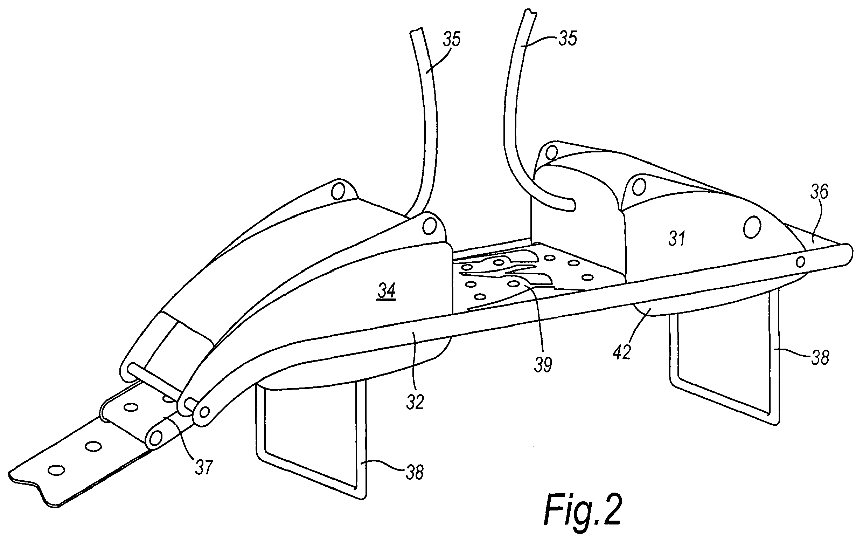

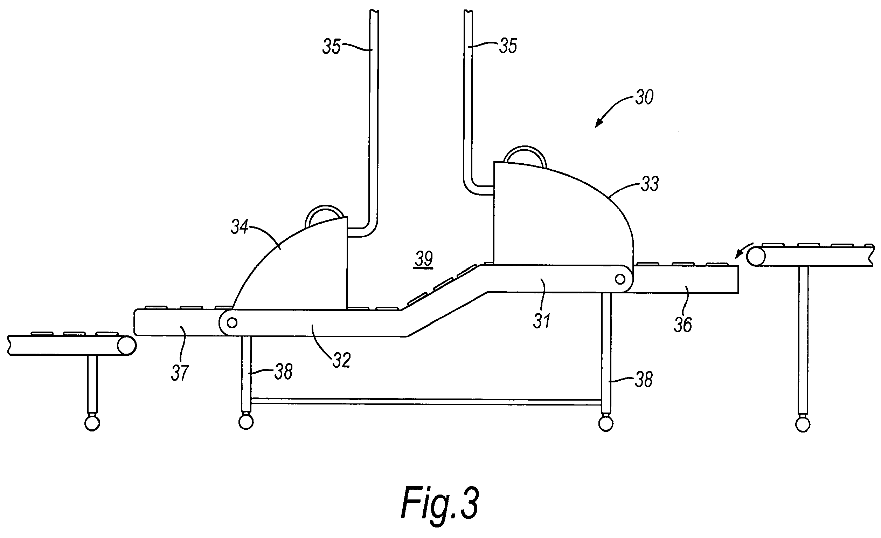

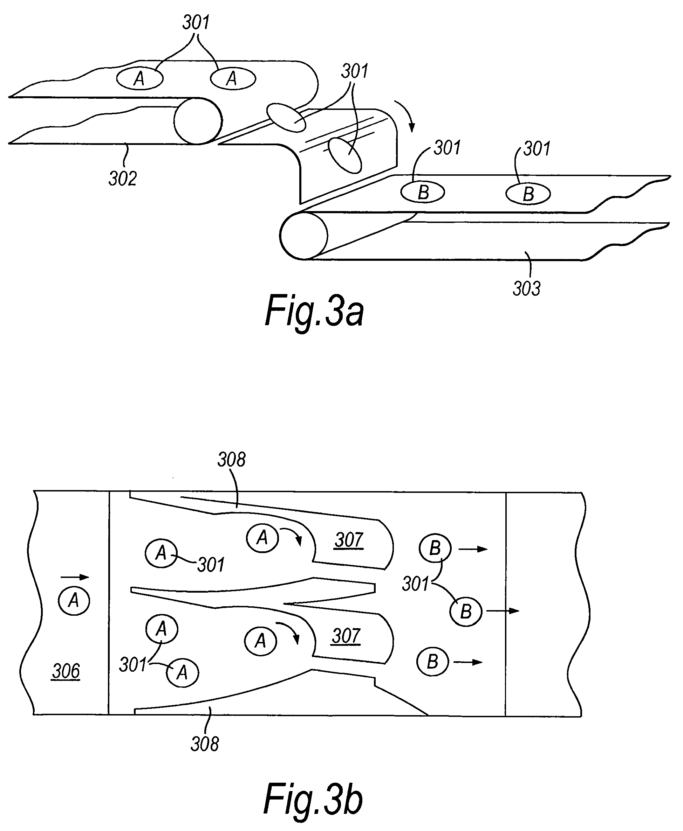

Figure 2 shows in perspective view a first embodiment of the invention, which shall be discussed in detail with reference to a simplified diagrammatic side view in Figure 3. The coating machine 30 comprises two coating stations 31, 32, enclosed by hoods or enclosures 33, 34, each having an umbilical line 35 operable to provide, for example, input gas, electrostatic leads and coating powder or slurry. The enclosure is conveniently manufactured from a plastics material, such as polypropylene, but is not necessarily made from such material. Incoming product is received on a vibratory conveyor element 36. The apparatus is arranged on two levels, between the first and second coating stations; with product being output on a second vibratory conveyor 37, the middle portion 39 comprising a inclined chute or flipper station operable to flip a generally planar product from a first side as it is received from a coating station onto its second side such that at a second coating station a second side to the product is exposed for receiving a coating within the second coating station. The coating and flipping stations are supported on a framework 38, conveniently made from an industrial grade stainless steel, such as 304 or 316.

The flipper unit 39 can comprise adjacent conveyor belts with a fall and relative speed sufficient to cause planar product to flip over, a cascade system, a plough-share-like flipper or other means of effecting a 180° flip to 99%+ of product. Different food products will need slightly different machinery settings, dependent upon average size, weight, density etc. Figure 3a shows a first simple example of a flipper unit 300 comprising two conveyors 302, 303 spaced apart in height from one another. Step elements 304 are placed immediately below the first conveyor, whereby, upon product 301 (shown to be round and generally planar) on the upper conveyor belt reaching the end of the belt, then it is liable to fall upon the step, whereby to ensure that product arrives upon the lower conveyor belt 303 in an inverted position relative to the first orientation. The relative speeds of the conveyors, the height of the drops in the steps, the average size of product, for example, are taken into account to achieve efficient flipping of product 301.

In the case of Figure 3b, a basic curvi-planar inverter apparatus is shown: product 301 on a first side, with a side A uppermost, arrives via a conveyor belt 306 towards a channel-like system 308 leading towards curvi-planar inverting elements 307 - which are somewhat similar to upturned ploughshares. Judicious use of product speed, orientation and size of the rounded inverting elements 307 enable product 301 to be effectively turned so that they then lie on a different die, with side B uppermost.

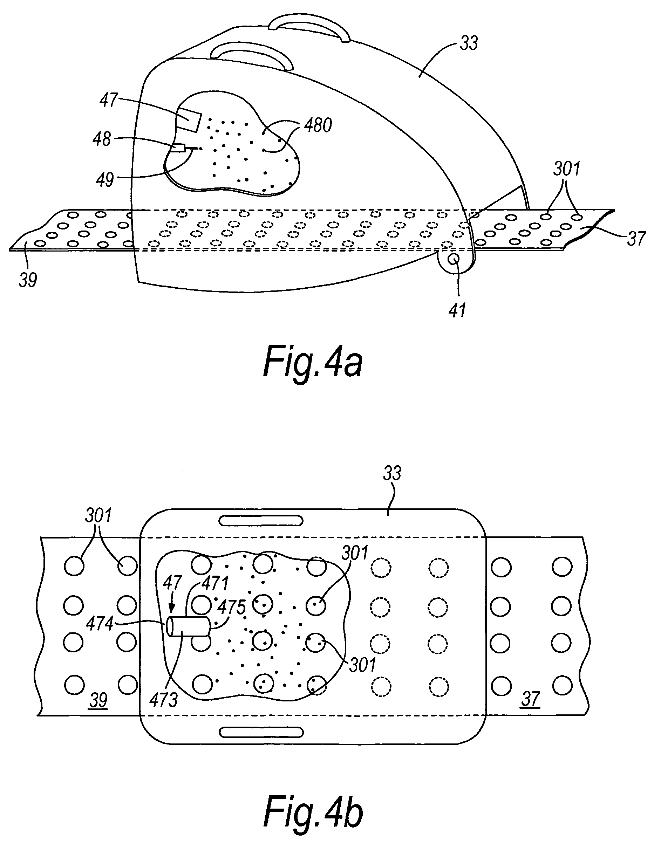

The conveyors are conveniently of a standard width, typically being: 30, 40, 50, 60, & 90cm within Europe. With reference to Figure 4, at either end of the coating system 40 in accordance with the present invention, there are coating units, which comprise an enclosure or hood 33, 34 which defines an enclosed space with sufficient volume to enable a coating to be applied. The enclosure or hood 33 can conveniently be hinged at 41 whereby, upon opening, for inspection or otherwise, a weight associated with the hood is borne by the apparatus, through a pivot element. The hood has side elements 42 which depend either side of the conveyor 43 below each side of a conveyor 44, which conveyor can conveniently comprise a vibratory conveyor 36.

With reference to Figures 4a and 4b, one type of powder dispensing system shall be discussed in detail: powder feed 47 comprises a chute with sides 471, 472 either side of a longitudinal axis being substantially at right angles to a flat bottom surface 473; the sides of the chute 471, 472 extending from a closed end 474 of the chute to an open end of the chute 475 comprising an edge which is arranged above an air nozzle 48, which provides a jet of electrostatically charged air by virtue of needle electrode 49 whereby to evenly dispense coating product 480 across the width of the conveyor, the air pressure being typically at 1.5 bar, the needle electrode 49 set at a high voltage, for example 85,000V. In Figure 4b, the view is from above, with a cut-out in the hood 33, whereby to show features of the electrostatic coating apparatus. The chute is inclined downwardly and is vibrated at a rate dependent upon, for example, the rate of dispensing required, the angle of inclination, width of the chute and the nature of the product to be dispensed. The chute is fed by a hopper, not shown at the closed end of the chute indicated at 475; this entry end may have a sloped wall to assist in the reception of coating material. The chute and vibratory device are mounted upon, resilient legs and mounted upon a frame for the conveyor apparatus, although other means of support can be provided. Conveniently, the vibrator is a caused to vibrate by mechanical or electrical pulses as is known.

The gas jet nozzle and needle electrode are located beneath the exit edge 474 of the chute 47. The gas jet nozzle can drive a 145° spray angle; being situated slightly below and to the rear of the chute, this has been found to provide a good degree of uniformity in scattering of the powder. For relatively narrow conveyor applications, a simple chute, with a straight exit edge at right angles to the chute axis may be employed. Notwithstanding this there will be limits, dependent upon the type of product and overall size. However, such determination would be well within the capability of the skilled man; a typical width of conveyor is 60cm; however the distance may be more than double this, and equally may be less than this. It will be realised that other coating methods may be deployed within the enclosure; for example two narrow vibratory chute electrostatic coating apparatus may be employed; simple gravity effect sprayers or other types of coating apparatus.

The system, as a whole comprises two of the coating enclosure units with an inverter apparatus positioned between them, whereby to ensure that product is inverted. In processes that require the application of a coating across a wide area, the apparatus described here can provide simple and reliable coating systems which can be easily and quickly cleaned, whereby to reduce overall manufacturing cost sand also enable a quick changeover of flavourings, for example in a snack factory.

By using a simple conveyor system, in relation to prior rotating drum equipment, not only is the overall quality improved, with increases in percentage of product being flavoured on both sides / at least two sides from typically 93% to 99%, through a reduction in wastage (including an increase in reclamation of product which can be collected about the machinery, rather than being allowed to escape into the atmosphere about the application machinery. Additionally the equipment, since it is smaller, with an overall length being smaller than a comparable 2 - 3 metre rotating drum on its own, the equipment will readily fit into an existing production line.

The product quality will be higher - there will be less over flavouring to make up for unevenly coated products from prior units. Damage due to breakage from the rotation of a drum will be absent, with no warts on finished products and no lumps on the production line. The system can also be utilized with liquid slurries.

A significant advantage of the system is that the system can occupy a much smaller floor space and enable closer spacing between adjacent equipment, irrespective of the different types of flavouring. This has significant benefits in the planning of a workspace environment, wherein conveying equipment between need not be so lengthy. It is to be remembered that when a production line is stopped, for flavoured products that have not been wrapped, then the whole conveying apparatus need to be cleaned. This is expensive not only in cleaning materials but also in the amount of downtime of a particular plant.

By virtue of the enclosure or hood, in accordance with the present invention, there is no significant escape of flavouring into the atmosphere about a flavouring apparatus. This means that the production line system apparatus can be more closely spaced without fear of cross contamination of product; there is less floor space to clean; there is less conveying plant. This extra plant is both costly to purchase, install and maintain and requires further floor space and needs to be cleaned, adding extra cleaning time to downtimes upon change of flavourings. The production line can be significantly shorter meaning that cross contamination of flavourings from neighbouring lines does not arise.

A particularly notable advantage of the present invention is that the coating system can be provided in close proximity to a bagging unit, whereby products can be bagged in, for example sealed plastics bags, a short distance from the system which has applied flavour, whereby to reduce possible contamination and ensure freshness. This means that packaging of product can be accomplished adjacent to the flavouring apparatus, whereby seals in wrapping agents are not contaminated; that is to say airborne product does not deteriorate thermal sealing unites, adhesive sealing units etcetera.

It will be appreciated by the person of skill in the art that various modifications may be made to the above described embodiments without departing from the scope of the present invention. For example, the electrical equipment can be manufactured from IP65 fittings, as is expected and all electrostatic standards can be easily adhered to. Standard control units, that can be interfaced with standard automation and drives control techniques. Apart from the conveyors, there are no moving items of machinery - other than control equipment such as compressors for the gas feed (typically this will be normal filtered atmospheric air, unless there is a contra-indication with a particular product to be dispensed.

The enclosure and coating apparatus are relatively compact compared to a drum; the equipment is easily and simply cleansed, reducing downtime when coatings and or flavourings are changed on a coating station. Since the provision of an enclosure over the powder distribution area enables a considerably reduced wastage of coating product, a further benefit is that less material needs to be removed as waste product, further simplifying any cleaning process. Additionally, the wastage that will occur will not readily enter the atmosphere surrounding the equipment, thereby considerably improving the working environment for personnel.

## Claims

1. Apparatus for delivering a coating substance towards a product to be coated, the apparatus (30) comprising a first coating station (31) including a pressurised gas supply, an inverting station, a second coating station (32) including a pressurised gas supply and conveyor (36, 37, 39) to convey product through said apparatus:
wherein said conveyor (36) is operable to convey product upon a surface thereof to said first coating station to enable coating using gas assistance upon an exposed surface of said product toward the inverting station;
wherein the inverting station (39) is operable to invert product such that, prior to product being transported by the conveyor to said second station where product is arranged such that an uncoated surface thereof is exposed;
wherein said conveyor (37) is operable to convey product upon a surface thereof through and out of said second coating station to enable coating using gas assistance upon a second exposed surface of said product as it passes therethrough;
each said coating station comprising an enclosure (33), each said enclosure being placed in close proximity to the conveyor, whereby application of the coating substance is contained within a confined volume above the conveyor of each respective coating station, whereby coating product pollution with regard to the atmosphere is substantially absent.

2. Apparatus according to claim 1, wherein the enclosure comprises a hood (33, 34) which extends along a portion of conveyor, having depending edges which lie closely above the conveyor, yet doe not interfere with passage of product as it passes along the conveyor.

3. Apparatus according to claim 2 wherein the edges of the hood are adjustable relative to a conveyor surface whereby to allow passage of different types of product thereunder.

4. Apparatus according to claim 1 wherein the hood has sides that depend below an operational height of the conveyor about the hood.

5. Apparatus according to any one of claims 1 - 4 wherein the coating apparatus comprise one or more of a powder feed (47), a slurry feed, a liquid feed, a vibratory feed and an electrostatic feed (49).

6. Apparatus according to any one or more of claims 1 - 5 wherein the inverter apparatus comprises one of adjacent, stepped conveyor belts, a cascade inverter system (304), a curvilinear plate system (307).

7. Apparatus according to any one or more of claims 1 - 6 wherein a packing station is provided adjacent an output from the second coating station.

8. Apparatus according to Claim 5 wherein the coating system comprise an electrostatic chute feeder (743) with gas assist.

9. Apparatus according to claim 8 wherein the gas assist is provide by a gas jet nozzle (48) located substantially immediately beneath an exit of said electrostatic chute feeder.

10. Apparatus according to Claim 5 wherein the coating system comprise an electrostatic vibratory feeder with gas assist.

11. Apparatus according to claim 10 wherein the gas assist is provide by a gas jet nozzle located substantially immediately beneath an exit of said vibratory feed.

12. Apparatus according to any one of claims 1 - 11 wherein a gutter is disposed upon an internal surface of the enclosure, whereby to prevent any adhered accumulated coating from dropping in a clump-like fashion upon product to be coated.

13. Apparatus according to any one of claims 1 - 11 wherein the coating apparatus comprises an electrostatic feed and the enclosure is at the same potential as the charged coating whereby charged coating is encouraged to pass to oppositely charged product to be coated.

14. A method for coating a product with a coating substance employing an apparatus comprising a first coating station (31) including a pressurised gas supply, an inverting station, a second coating station (32) and conveyor to convey (36, 37, 39) product through said apparatus, each coating station having a coating area enshrouded with an enclosure (33, 34):
the method comprising the steps of conveying a product upon a conveyor through a first coating station (31), the enclosure (33) being placed in close proximity to the conveyor, and, using gas assistance, coating the coating substance on a first exposed surface of said product as it passes through the first coating station toward the inverting station;
conveying the product to an inverting station;
Inverting product by means of the inverting station whereby to expose a second surface of the product;
conveying the product to a second coating station (32), the enclosure (34) being placed in close proximity to the conveyor, and, using gas assistance, coating the coating substance on a second exposed surface of said product as it passes through the second coating station;
whereby, upon exit from the second coating station the product is coated on two faces and coating product pollution with regard to the atmosphere is substantially absent.

15. A method according to claim 14 wherein the coating system is an electrostatic coating system, the steps of coating in each coating process including the steps of energising the coating substance with a raised electrostatic potential and of placing the product to be coated at a different electrostatic potential whereby to enable charged coating substances to be electrostatically attracted to the product.

## Patentansprüche

1. Vorrichtung zum Abgeben einer Beschichtungssubstanz an ein zu beschichtendes Produkt, wobei die Vorrichtung (30) umfasst: eine erste Beschichtungsstation (31) einschließlich einer Druckgasquelle, eine Umdrehungsstation, eine zweite Beschichtungsstation (32) einschließlich einer Druckgasquelle und eine Fördereinrichtung (36, 37, 39) zum Befördern des Produkts durch die Vorrichtung:
wobei die Fördereinrichtung (36) dazu dient, auf einer ihrer Oberflächen das Produkt in Richtung auf die Umdrehungsstation zur ersten Beschichtungsstation zu befördern, um eine gasunterstützte Beschichtung einer exponierten Oberfläche des Produkts zu ermöglichen;
wobei die Umdrehungsstation (39) dazu dient, das Produkt umzudrehen, so dass das Produkt umgedreht wird, bevor das Produkt von der Fördereinrichtung zu der zweiten Station transportiert wird, wobei das Produkt so angeordnet wird, dass eine seiner unbeschichteten Oberflächen exponiert ist;
wobei die Fördereinrichtung (37) dazu dient, das Produkt auf einer ihrer Oberflächen durch die erste Beschichtungsstation und aus dieser hinaus zu befördern, um eine gasunterstützte Beschichtung einer zweiten exponierten Oberfläche des Produkts zu ermöglichen, während das Produkt durch sie hindurchläuft;
wobei die Beschichtungsstation eine Einhausung (33) umfasst, wobei die Einhausung sehr nahe an der Fördereinrichtung angeordnet ist, wodurch eine Aufbringung der Beschichtungssubstanz innerhalb eines begrenzten Volumens oberhalb der Fördereinrichtung der jeweiligen Beschichtungsstationen stattfindet, wodurch eine Verschmutzung der Atmosphäre im Zusammenhang mit einer Produktbeschichtung vermieden wird.

2. Vorrichtung nach Anspruch 1, wobei die Einhausung eine Haube (33, 34) umfasst, die sich entlang eines Abschnitts der Fördereinrichtung erstreckt, und die nach unten vorstehende Ränder aufweist, die nahe über der Fördereinrichtung liegen, aber den Durchgang des Produkts, das entlang der Fördereinrichtung läuft, nicht behindern.

3. Vorrichtung nach Anspruch 2, wobei die Ränder der Haube in Bezug auf die Oberfläche der Fördereinrichtung einstellbar sind, um darunter den Durchgang verschiedener Arten von Produkt zu ermöglichen.

4. Vorrichtung nach Anspruch 1, wobei die Haube Seiten aufweist, die von einer Betriebshöhe der Fördereinrichtung aus um die Haube herum nach unten vorstehen.

5. Vorrichtung nach einem der Ansprüche 1-4, wobei die Beschichtungsvorrichtung eine Stromzuführung (47), eine Schlämmenzuführung, eine Flüssigkeitszuführung, eine Rüttelzuführung und eine elektrostatische Zuführung (49) umfasst.

6. Vorrichtung nach einem oder mehreren der Ansprüche 1-5, wobei die Umdrehvorrichtung aneinander angrenzende Stufenförderbänder, ein Kaskadenumdrehsystem (304) oder ein krummliniges Plattensystem (307) umfasst.

7. Vorrichtung nach einem oder mehreren der Ansprüche 1-6, wobei eine Packstation angrenzend an einen Auslauf aus der zweiten Beschichtungsstation vorgesehen ist.

8. Vorrichtung nach Anspruch 5, wobei das Beschichtungssystem einen elektrostatischen Zuführungstrichter (743) mit Gasunterstützung umfasst.

9. Vorrichtung nach Anspruch 8, wobei die Gasunterstützung durch eine Gaseinspeisungsdüse (48) bereitgestellt wird, die im Wesentlichen unmittelbar unterhalb eines Auslaufs des elektrostatischen Zuführungstrichters angeordnet ist.

10. Vorrichtung nach Anspruch 5, wobei das Beschichtungssystem eine elektrostatische Rüttelzuführung mit Gasunterstützung umfasst.

11. Vorrichtung nach Anspruch 10, wobei die Gasunterstützung durch eine Gaseinspeisungsdüse (48) bereitgestellt wird, die im Wesentlichen unmittelbar unterhalb eines Auslaufs der Rüttelzuführung angeordnet ist.

12. Vorrichtung nach einem der Ansprüche 1-11, wobei eine Rinne auf einer Innenfläche der Einhausung angeordnet ist, um dadurch zu verhindern, dass Beschichtung, die dort etwa hängengeblieben ist und sich angesammelt hat, in Klumpen auf das zu beschichtende Produkt herabfällt.

13. Vorrichtung nach einem der Ansprüche 1-11, wobei die Beschichtungsvorrichtung eine elektrostatische Zuführung umfasst und die Einhausung das gleiche Potential aufweist wie die geladene Beschichtung, wodurch ein Laufen der geladenen Beschichtung zum entgegengesetzt geladenen, zu beschichtenden Produkt gefördert wird.

14. Verfahren zum Beschichten eines Produkts mit einer Beschichtungssubstanz, für das eine Vorrichtung verwendet wird, die eine erste Beschichtungsstation (31) einschließlich einer Druckgasquelle, eine Umdrehungsstation, eine zweite Beschichtungsstation (32) und eine Fördereinrichtung zum Befördern (36, 37, 39) des Produkts durch die Vorrichtung umfasst, wobei jede Beschichtungsstation einen Beschichtungsbereich aufweist, der mit einer Einhausung (33, 34) umhüllt ist:
wobei das Verfahren die folgenden Schritte umfasst: Befördern eines Produkts auf einer Fördereinrichtung durch eine erste Beschichtungsstation (31), wobei die Einhausung (33) in großer Nähe zur Fördereinrichtung angeordnet wird, und gasunterstütztes Beschichten einer ersten exponierten Oberfläche des Produkts, während es durch die erste Beschichtungsstation in Richtung auf die Umdrehungsstation läuft, mit der Beschichtungssubstanz;
Befördern des Produkts zu einer Umdrehungsstation;
Umdrehen des Produkts mittels der Umdrehungsstation, um dadurch eine zweite Oberfläche des Produkts zu exponieren;
Befördern des Produkts zu einer zweiten Beschichtungsstation (32), wobei die Einhausung (34) in großer Nähe zur Fördereinrichtung angeordnet wird, und gasunterstütztes Beschichten einer zweiten exponierten Oberfläche des Produkts, während es durch die zweite Beschichtungsstation läuft, mit der Beschichtungssubstanz;
wodurch das Produkt beim Austritt aus der zweiten Beschichtungsstation auf zwei Flächen beschichtet worden ist und eine Verschmutzung der Atmosphäre im Zusammenhang mit der Produktbeschichtung im Wesentlichen nicht stattfindet.

15. Verfahren nach Anspruch 14, wobei das Beschichtungssystem ein elektrostatisches Beschichtungssystem ist und die Beschichtungsschritte in jedem Beschichtungsprozess die folgenden Schritte beinhalten: Anregen der Beschichtungssubstanz mit einem erhöhten elektrostatischen Potenzial und Setzen des zu beschichtenden Produkts auf ein anderes elektrostatisches Potenzial, wodurch eine elektrostatische Anziehung von geladenen Beschichtungssubstanzen an das Produkt ermöglicht wird.

## Revendications

1. Appareil destiné à délivrer une substance de revêtement vers un produit à revêtir, l'appareil (30) comportant une première station de revêtement (31) comprenant une alimentation de gaz sous pression, une station d'inversion, une seconde station de revêtement (32) comprenant une alimentation de gaz sous pression et un convoyeur (36, 37, 39) pour transporter le produit au moyen dudit appareil :
dans lequel ledit convoyeur (36) est utilisable pour transporter le produit sur une surface de celui-ci vers ladite première station de revêtement afin de permettre le revêtement à l'aide de l'assistance de gaz sur une surface apparente dudit produit vers la station d'inversion ;
dans lequel la station d'inversion (39) est utilisable pour inverser le produit de sorte que, le produit étant transporté par le convoyeur vers ladite seconde station dans laquelle le produit est disposé de sorte qu'une surface non revêtue de celui-ci est apparente ;
dans lequel ledit convoyeur (37) est utilisable pour transporter le produit sur une surface de celui-ci à travers et hors de ladite seconde station de revêtement afin de permettre le revêtement à l'aide de l'assistance de gaz sur une surface apparente dudit produit lorsqu'il passe à travers celle-ci ;
chacune des stations de revêtement comportant une enceinte (33), chacune desdites enceintes étant placée à proximité du convoyeur, grâce à quoi l'application de la substance de revêtement est contenue à l'intérieur d'un volume confiné au-dessus du convoyeur de chaque station de revêtement respective, grâce à quoi la pollution du produit de revêtement par rapport à la pollution atmosphérique est essentiellement nulle.

2. Appareil selon la revendication 1, dans lequel l'enceinte comporte un capot (33, 34) qui s'étend le long d'une partie du convoyeur, présentant des bords pendants qui se trouvent proches au-dessus du convoyeur, mais n'interfèrent pas encore avec le passage de produit lorsqu'il passe le long du convoyeur.

3. Appareil selon la revendication 2, dans lequel les bords du capot peuvent être ajustés par rapport à une surface du convoyeur ce qui permet le passage de différents types de produits en dessous de celui-ci.

4. Appareil selon la revendication 1, dans laquelle le capot présente des côtés qui pendent en dessous d'une hauteur de fonctionnement du convoyeur près du capot.

5. Appareil selon une quelconque des revendications 1 à 4, dans lequel l'appareil de revêtement comporte une ou plusieurs alimentations en poudre (47), une alimentation de coulis, une alimentation liquide, une alimentation vibrante et une alimentation électrostatique (49).

6. Appareil selon une quelconque des revendications 1 à 5, dans lequel l'appareil inverseur comporte un des convoyeurs à courroies à étages adjacents, un système inverseur en cascade (304), un système de plaques curvilinéaires (307).

7. Appareil selon une ou plusieurs des revendications 1 à 6, dans lequel une station d'emballage est fournie adjacente à une sortie de la seconde station de revêtement.

8. Appareil selon la revendication 5, dans lequel le système de revêtement comporte un dispositif d'alimentation à goulotte (743) avec assistance de gaz.

9. Appareil selon la revendication 8, dans lequel l'assistance de gaz est fournie par une buse de jet de gaz (48) située pratiquement immédiatement sous une sortie dudit dispositif d'alimentation à goulotte électrostatique.

10. Appareil selon la revendication 5, dans laquelle le système de revêtement comporte un dispositif d'alimentation vibratoire électrostatique avec assistance de gaz.

11. Appareil selon la revendication 10, dans lequel l'assistance de gaz est fournie par une buse de jet de gaz située pratiquement immédiatement sous une sortie dudit dispositif d'alimentation vibratoire.

12. Appareil selon une quelconque des revendications 1 à 11, dans lequel une gouttière est disposée sur une surface interne de l'enceinte, ce qui permet de prévenir un quelconque revêtement accumulé adhéré de tomber à la façon d'un amas sur le produit à revêtir.

13. Appareil selon une quelconque des revendications 1 à 11, dans lequel l'appareil de revêtement comporte une alimentation électrostatique et l'enceinte est au même potentiel que le revêtement chargé, grâce à quoi le revêtement chargé est encouragé à passer vers le produit à revêtir chargé de façon opposée.

14. Un procédé destiné au revêtement d'un produit avec une substance de revêtement employant un appareil comportant une première station de revêtement (31) comprenant une alimentation de gaz sous pression, une station d'inversion, une seconde station de revêtement (32) et le convoyeur pour transporter (36, 37, 39) le produit à travers ledit appareil, chaque station de revêtement présentant une surface de revêtement enveloppée avec une enceinte (33, 34) :
le procédé comportant les étapes de transport d'un produit sur un convoyeur à travers une première station de revêtement (31), l'enceinte (33) étant placée à proximité du convoyeur, et à l'aide de l'assistance de gaz, le revêtement de la substance de revêtement sur une première surface apparente dudit produit lorsqu'il passe à travers la première station de revêtement vers la station d'inversion ;
le transport du produit vers une station d'inversion ;
l'inversion de produit au moyen d'une station d'inversion pour exposer une seconde surface du produit ;
Le transport du produit vers une seconde station de revêtement (32), l'enceinte (34) étant placée à proximité du convoyeur, et, à l'aide de l'assistance de gaz, le revêtement de la substance de revêtement sur une seconde surface apparente dudit produit lorsqu'il passe à travers la seconde station de revêtement ;
grâce à quoi, à la sortie de la seconde station de revêtement, le produit est revêtu sur les deux faces et la pollution du produit de revêtement par rapport à la pollution atmosphérique est essentiellement nulle.

15. Un procédé selon la revendication 14, dans lequel le système de revêtement est un système de revêtement électrostatique, les étapes de revêtement dans chaque processus de revêtement comprenant les étapes de mise sous tension de la substance de revêtement avec un potentiel électrostatique élevé et le placement du produit à revêtir à un potentiel électrostatique différent, ce qui permet d'activer les substances de revêtement chargées pour être attirées électrostatiquement vers le produit.
